# FASCICULE DE BREVET EUROPEEN

(11) **EP 3 616 507 B1**
(45) Date de publication et mention de la délivrance du brevet: **25.09.2024**
(21) Numéro de dépôt: 19194254.9
(22) Date de dépôt: 29.08.2019
(51) Int. Cl.: A01K 1/015

(54) **STRUCTURE DE MATELAS POUR LE CONFORT DES ANIMAUX DANS UNE ENCEINTE D'ÉLEVAGE**
MATRATZENSTRUKTUR FÜR DEN KOMFORT VON TIEREN IN EINER TIERZUCHTANLAGE
MATTRESS STRUCTURE FOR ANIMAL COMFORT IN A FARM ENCLOSURE

(30) Priorité: 30.08.2018 FR 1857820
(43) Date de publication de la demande: 04.03.2020
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle

(56) Documents cités:
- EP-A1- 3 469 892
- WO-A1-2017/064417
- GB-A- 1 563 204
- JP-A- 2004 267 218
- US-A- 2 665 664
- US-A1- 2005 086 886

## Description

### DOMAINE TECHNIQUE AUQUEL SE RAPPORTE L'INVENTION

La présente invention concerne de manière générale le domaine des structures de matelas pour le confort des animaux, par exemple pour les bovins laitiers et les bovins à viande.

Elle concerne plus particulièrement les structures de matelas destinées à recouvrir le sol d'une zone d'accueil dans une enceinte d'élevage, ladite zone d'accueil étant bordée par un couloir de circulation éventuellement équipé d'une grille de collecte des déjections.

### ARRIERE-PLAN TECHNOLOGIQUE

Le confort des animaux constitue un paramètre déterminant dans le rendement d'un élevage.

Ce confort influence notamment la santé, la façon de s'alimenter, la prise alimentaire, la fertilité et la longévité des animaux.

De manière courante, en étable, les bovins se reposent individuellement dans des logettes, encore couramment appelées « stabulation libre » ou « free stall », dans lesquelles les bovins sont libres de se lever et de se coucher.

De manière alternative, dans les étables à stabulation entravée (encore couramment appelées « tie stall »), les animaux sont attachés et disposés en long (ou en travers) sur un ou deux rangs. Les animaux viennent ici pour le repos, pour recevoir des soins ou une alimentation de complément et pour la traite.

Lorsqu'ils effectuent des mouvements dans de telles zones d'accueil (aussi bien en stabulation libre que entravée), notamment lors du passage entre les stations debout et couchée, les animaux sont susceptibles de se blesser. C'est en particulier le cas lorsque la litière est constituée de paille recouvrant du béton, qui ne protège pas l'animal de la glissade.

Pour limiter (voire supprimer) ce type d'incident et les blessures qui en découlent, il est connu d'équiper le sol de la zone d'accueil avec des matelas de confort intégrant au moins une couche résiliente qui est apte à subir une déformation élastique.

Par ailleurs, il est également important que la zone d'accueil reste la plus propre et la plus sèche possible de manière à limiter les problèmes sanitaires (notamment les mammites chez les vaches laitières).

Pour cela, certains matelas de confort comportent une bande arrière qui présente une pente descendante orientée vers le couloir de circulation juxtaposé.

Cette pente favorise alors l'évacuation des jus, en continue et par simple gravité.

De tels revêtements de sol sont par exemple décrits dans les documents US-2005/086886, US-2 665 664 ou JP-2004 267218.

Mais ces matelas de confort actuels consistent en des plaques monoblocs moulées, ce qui complique leur fabrication et leur transport.

En outre, ces matelas de confort se présentent sous la forme de matelas individuels, avec des problèmes de pose et d'étanchéité inter-matelas qui en découlent.

### OBJET DE L'INVENTION

Afin de remédier à l'inconvénient précité de l'état de la technique, la présente invention propose une nouvelle structure de matelas de confort qui comporte une pente intégrée pour favoriser l'évacuation des jus.

Plus particulièrement, on propose selon l'invention une structure de matelas pour le confort des animaux dans une enceinte d'élevage, destinée à recouvrir le sol d'une zone d'accueil bordée par un couloir de circulation éventuellement équipé d'une grille de collecte des déjections.

La structure de matelas comprend :
(i) au moins une couche élastique, comportant une face supérieure qui est apte à subir une déformation élastique et qui comporte au moins un emplacement sur lequel un animal est destiné à prendre appui,
(ii) une embase, destinée à reposer sur ledit sol et à recevoir ladite au moins une couche élastique.

Ladite embase comprend au moins deux pièces juxtaposées :
- au moins une plaque avant destinée à être rapportée à distance dudit couloir de circulation, sous une bande longitudinale avant de ladite au moins une couche élastique, et
- au moins un longeron arrière destiné à être intercalé entre ledit couloir de circulation et ladite au moins une plaque avant, sous une bande longitudinale arrière de ladite au moins une couche élastique,

laquelle au moins une plaque avant et lequel au moins un longeron arrière comportent chacun deux faces opposées :
   - une face inférieure, destinée à reposer sur le sol, et
   - une face supérieure, destinée à servir de surface de réception pour ladite au moins une couche élastique,
lesquelles faces opposées de ladite au moins une plaque avant s'étendent parallèlement, ou au moins approximativement parallèlement, l'une par rapport à l'autre, et
lesquelles faces opposées dudit au moins un longeron arrière convergent depuis une bordure avant destinée à être juxtaposée à ladite plaque avant, vers une bordure arrière, opposée, destinée à être juxtaposée audit couloir de circulation.

La largeur dudit au moins un longeron arrière est supérieure à 100 mm, et les faces opposées dudit au moins un longeron arrière définissent entre elles une pente allant de 1 à 10 %.

Une telle structure de matelas, composite, est plus simple à fabriquer et à poser.

En outre, cette structure de matelas peut être conçue pour recouvrir, de manière continue / linéaire, la zone d'accueil des animaux de manière à offrir une hygiène optimale.

Le longeron arrière permet également la protection de la structure de matelas à l'encontre des éventuelles remontées d'humidité.

D'autres caractéristiques non limitatives et avantageuses de la structure de matelas conforme à l'invention, prises individuellement ou selon toutes les combinaisons techniquement possibles, sont les suivantes :
- la largeur dudit au moins un longeron arrière est de 200 à 800 mm, de préférence encore de 350 à 650 mm ;
- les faces opposées dudit au moins un longeron arrière définissent entre elles une pente allant de 1,5 et 6%, de préférence encore allant de 3 à 5% ;
- ledit au moins un longeron arrière comporte une bordure arrière ayant une hauteur de 1 à 10 mm, et une bordure avant ayant une hauteur de 10 à 30 mm ;
- ledit au moins un longeron est réalisé dans un matériau plastique, avantageusement obtenu par moulage injection ;
- ladite au moins une plaque avant est réalisée dans un matériau élastique, et la masse volumique de ladite au moins une plaque avant est avantageusement supérieure à la masse volumique de ladite au moins une couche élastique ; de préférence, la masse volumique de ladite au moins une plaque avant est comprise entre 150 et 800 kg / m³, et la masse volumique de ladite au moins une couche élastique est comprise entre 150 et 500 kg / m³;
- ladite au moins une couche élastique comprend deux couches élastiques superposées : une couche élastique supérieure et une couche élastique intercalaire, laquelle couche élastique supérieure forme la face supérieure de ladite au moins une couche élastique, et laquelle couche élastique intercalaire est interposée entre ladite couche élastique supérieure et ladite embase ; de préférence, la couche élastique supérieure comporte deux bandes longitudinales, s'étendant au-delà de ladite couche élastique inférieure, pour leur fixation au sol ; la structure de matelas comprend avantageusement des profilés, du type baguettes, qui sont destinés à être fixés dans le sol et qui sont destinés à coopérer avec ladite au moins une couche élastique, avantageusement avec les bandes longitudinales ;
- ladite bande longitudinale avant de ladite au moins une couche élastique comporte : au moins une conduite pour la circulation d'un premier fluide caloporteur, et éventuellement au moins une chambre étanche contenant un second fluide caloporteur, recouvrant ladite au moins une conduite.

La présente invention concerne aussi une enceinte pour l'élevage d'animaux comportant au moins une zone d'accueil longée par un couloir de circulation éventuellement équipé d'une grille de collecte des déjections.

La zone d'accueil est recouverte par ladite structure de matelas selon l'invention de sorte que ladite bande arrière borde ledit couloir de circulation, avec une pente descendante orientée vers ledit couloir de circulation pour favoriser l'écoulement des fluides vers ledit couloir de circulation.

De préférence, la structure de matelas comprend au moins une couche élastique qui comprend deux couches élastiques superposées : une couche élastique supérieure et une couche élastique inférieure.

La couche élastique supérieure forme la face supérieure de ladite au moins une couche élastique, et la couche élastique inférieure est interposée entre ladite couche élastique supérieure et ladite embase.

La couche élastique supérieure comporte de préférence deux bandes longitudinales, s'étendant au-delà de ladite couche élastique inférieure, pour leur fixation au sol.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de côté, générale et schématique, d'une zone d'accueil qui est équipée d'une structure de matelas conforme à l'invention ;
- les figures 2 et 3 sont des vues schématiques et isolées, respectivement en perspective et de côté, de la structure de matelas équipant la zone d'accueil selon la figure 1 ;
- la figure 4 est une vue partielle et agrandie de la figure 3, montrant en particulier la structure et l'agencement dudit au moins un longeron arrière de l'embase ;
- la figure 5 est une vue schématique et isolée, vue de côté, d'une variante de réalisation de la structure de matelas selon l'invention dans laquelle la bande longitudinale avant de ladite au moins une couche élastique intègre des moyens de régulation thermique.

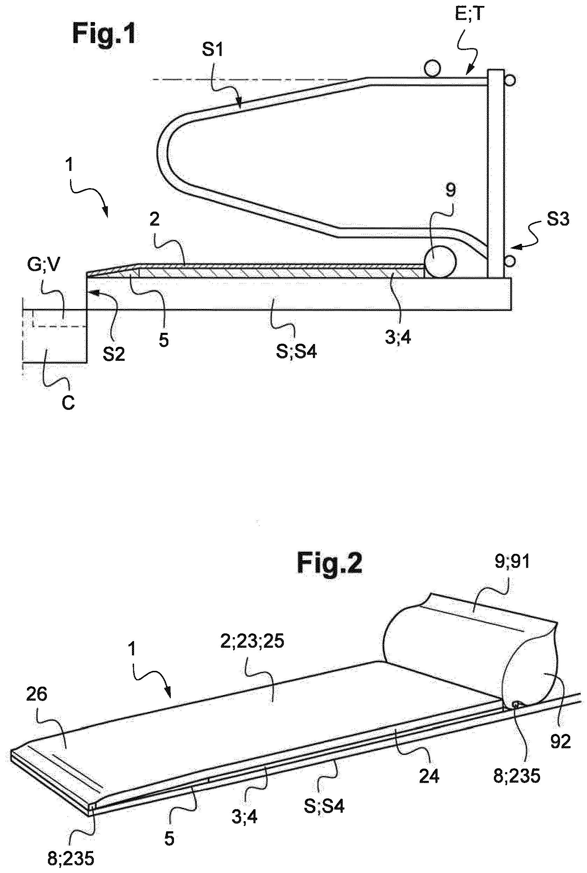

La structure de matelas 1 selon l'invention est destinée à équiper une enceinte d'élevage E dans laquelle est ménagée au moins une zone d'accueil S pour les animaux (figure 1).

L'enceinte d'élevage E consiste avantageusement en une étable pour l'élevage de bovins, en particulier de bovins laitiers ou de bovins à viande.

La zone d'accueil S comprend avantageusement une plateforme formant des stalles de couchage, et plus particulièrement des espaces d'accueil T en forme de logettes ménagées sur au moins une ligne pour la stabulation libre des animaux.

Les logettes constituent un compromis entre un couchage confortable pour le bovin, le respect du mouvement lever/coucher, une station debout confortable et un minimum de souillures dans la logette.

De manière alternative, la zone d'accueil S peut comporter des espaces d'accueil T qui sont aménagés pour la mise en oeuvre d'une stabulation entravée, encore couramment appelées « tie stall ». Dans ce cas, les animaux sont attachés et disposés en long (ou en travers) sur un ou deux rangs.

Tel que représenté schématiquement sur la figure 1, la zone d'accueil S est bordée par un couloir de circulation C (représenté très partiellement).

Sur les côtés, dans les étables à stabulation entravée - « tie stall », ce couloir de circulation C est éventuellement équipé d'une grille G recouvrant un caniveau V pour la collecte des déjections.

Chaque espace d'accueil T, classique en soi, présente avantageusement un contour rectangulaire qui est délimité par :
- deux séparations latérales S1, par exemple des structures tubulaires,
- un seuil arrière S2, s'étendant le long du couloir de circulation C (et le cas échéant de la grille G dans les étables à stabulation entravée - « tie stall »), formant également la bordure arrière de la zone d'accueil S,
- une limite avant S3, comprenant avantageusement une barre haute au garrot et un arrêtoir inférieur (ou limiteur d'avancement), formant le fond de l'espace d'accueil T et également la bordure avant de la zone d'accueil S, et
- un sol S4, par exemple une dalle de béton, formant également le sol de la zone d'accueil S.

Le sol S4 peut être horizontal ou au moins approximativement horizontal.

Ce sol S4 peut également comporter une pente descendante qui est orientée vers le couloir de circulation C.

Cette pente descendante peut être ménagée sur toute la largeur du sol S4, depuis la limite avant S3 vers le seuil arrière S2.

### Structure de matelas

La structure de matelas 1 recouvre le sol S4 de la zone d'accueil S et ainsi le sol S4 de chacun de ses espaces d'accueil T.

De préférence, une structure de matelas 1 est rapportée de sorte à recouvrir (avantageusement de manière continue - sans joint) plusieurs espaces d'accueil T juxtaposés.

Cette structure de matelas 1 comporte ainsi plusieurs emplacements juxtaposés qui sont adaptés à accueillir chacun un animal et qui correspondent chacun à la surface au sol d'un espace d'accueil T.

De manière alternative, chaque espace d'accueil T comporte sa propre structure de matelas 1 définissant ainsi un unique emplacement adapté à accueillir un animal.

La structure de matelas 1 selon l'invention est décrite plus en détails ci-dessous en relation avec les figures 2 à 4.

Cette structure de matelas 1 comprend :
(i) au moins une couche élastique 2, qui comporte au moins un emplacement sur lequel un animal est destiné à prendre appui, et
(ii) une embase 3, destinée à reposer sur le sol S4 et à recevoir ladite au moins une couche élastique 2.

L'embase 3 est ainsi intercalée / interposée entre ladite au moins une couche élastique 2 et le sol S4.

### Au moins une couche élastique

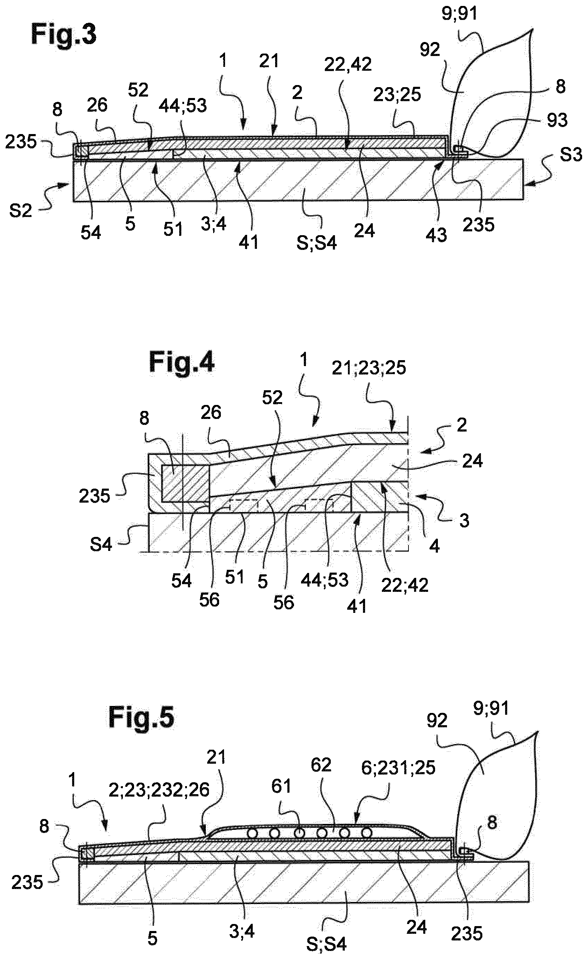

Tel que représenté en particulier sur la figure 4, ladite au moins une couche élastique 2 comporte deux faces opposées :
- une face supérieure 21, apte à subir une déformation élastique et sur laquelle un animal est destiné à prendre appui, et
- une face inférieure 22 reposant sur l'embase 3.

Ladite au moins une couche élastique 2 comporte une épaisseur (distance entre les faces supérieure 21 et inférieure 22) constante ou au moins approximativement constante.

Ladite au moins une couche élastique 2 comprend ici deux couches élastiques superposées :
- une couche élastique supérieure 23, formant la face supérieure 21 de ladite au moins une couche élastique 2, et avantageusement linéaire / continue, et
- une couche élastique inférieure 24, intercalée / interposée entre ladite couche élastique supérieure 23 et l'embase 3, destinée à former une garniture, éventuellement linéaire / continue.

La couche élastique supérieure 23 consiste ici en un film (dit encore « feuille » ou « bande ») qui recouvre la couche élastique inférieure 24 et l'embase 3. Cette couche élastique supérieure 23 résiste avantageusement à l'abrasion et à l'humidité.

Cette couche élastique supérieure 23 est par exemple réalisée dans un matériau choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastique supérieure 23 possède par exemple une épaisseur comprise entre 2 et 5 mm.

Tel que développé par la suite, cette couche élastique supérieure 23 comporte deux bandes longitudinales 235, s'étendant au-delà de ladite couche élastique inférieure 24, pour leur fixation au sol S4.

La couche élastique inférieure 24 consiste par exemple en une plaque de granules de caoutchouc (agglomérés ou non agglomérés), de polyuréthane ou de latex.

Cette couche élastique inférieure 24 possède par exemple une épaisseur constante comprise entre 25 et 50 mm.

Cette couche élastique inférieure 24, avantageusement de contour rectangulaire, possède des dimensions adaptées pour recouvrir et épouser la face supérieure de l'embase 3.

La couche élastique inférieure 24 présente encore avantageusement une masse volumique comprise entre 150 et 500 kg / m³.

### Embase

L'embase 3 comprend au moins deux pièces juxtaposées :
- au moins une plaque avant 4, destinée à être rapportée à distance dudit couloir de circulation C, sous une bande longitudinale avant 25 de ladite au moins une couche élastique 2, et
- au moins un longeron arrière 5, destiné à être intercalé entre ledit couloir de circulation C et ladite au moins une plaque avant 4, sous une bande longitudinale arrière 26 de ladite au moins une couche élastique 2.

En l'espèce, l'embase 3 est constitué de l'association de ladite au moins une plaque avant 4 et dudit au moins un longeron arrière 5.

Au sein d'un emplacement, la structure de matelas 1 illustrée comporte avantageusement une plaque avant 4 monobloc et un longeron arrière 5 monobloc.

Ladite au moins une plaque avant 4 et ledit au moins un longeron arrière 5 comportent chacun deux faces opposées (figure 4) :
- une face inférieure 41, 51, destinée à reposer sur le sol S4, et
- une face supérieure 42, 52, destinée à servir de surface de réception pour ladite au moins une couche élastique 2.

Ladite au moins une plaque avant 4 et ledit au moins un longeron arrière 5 comportent encore chacun deux bordures longitudinales opposées :
- une bordure avant 43, 53, destinée à être orientée du côté de la limite avant S3 de l'espace d'accueil T, et
- une bordure arrière 44, 54, destinée à être orientée du côté du seuil arrière S2 de l'espace d'accueil T.

Ladite au moins une plaque avant 5 consiste avantageusement en une pièce (ou un bloc de matière), de forme générale parallélépipédique, de préférence réalisée dans un matériau élastique.

Par « matériau élastique », on entend avantageusement une plaque réalisée en granules de caoutchouc (agglomérés ou non agglomérés) ou en latex.

La masse volumique de ladite au moins une plaque avant 5 est avantageusement comprise entre 150 et 800 kg / m³, de préférence de 450 à 550 kg / m³.

Cette masse volumique est avantageusement supérieure à la masse volumique de ladite au moins une couche élastique 2 pour éviter les phénomènes de cisaillement au niveau des bordures 53, 44 attenantes (respectivement la bordure avant 53 du longeron arrière 5 et la bordure arrière 44 de ladite plaque avant 4).

Les faces 41, 42 opposées de ladite au moins une plaque avant 4 s'étendent parallèlement, ou au moins approximativement parallèlement, l'une par rapport à l'autre.

Ladite au moins une plaque avant 4 a ainsi la forme générale d'un parallélépipède rectangle.

L'épaisseur de ladite au moins une plaque avant 4 (correspondant à la distance entre ses faces 41, 42) est avantageusement identique ou au moins approximativement identique (différence d'au maximum 2 mm), à la hauteur de la bordure avant 53 dudit au moins un longeron arrière 5.

La largeur L1 de ladite au moins une plaque avant 4 correspond à la distance entre ses bordures avant 43 et arrière 44. Cette largeur L1 est par exemple de 1650 mm à 1900 mm pour des animaux adulte et de 1200 à 1550 mm pour les jeunes bovins.

De son côté, ledit au moins un longeron arrière 5 consiste avantageusement en au moins une pièce (ou un bloc de matière), de forme générale parallélépipédique.

Les faces 51, 52 opposées dudit au moins un longeron arrière 5 convergent depuis sa bordure avant 53 vers sa bordure arrière 54, opposée.

Ledit au moins un longeron arrière 5 a ainsi avantageusement la forme générale d'un parallélépipède à section en trapèze rectangle.

Ainsi, en pratique, ledit au moins un longeron arrière 5 est agencé de sorte que :
- sa bordure avant 53 soit juxtaposée à la bordure arrière 44 de ladite plaque avant 4 et
- sa bordure arrière 54 soit juxtaposée au seuil arrière S2 de l'espace d'accueil T et au couloir de circulation C.

La face supérieure 52 dudit au moins un longeron arrière 5 est ainsi descendante en direction du couloir de circulation C.

A titre d'exemple, les faces 51, 52 opposées dudit au moins un longeron arrière 5 définissent entre elles une pente allant de 1 à 10 %, de préférence allant de 1,5 et 6%, de préférence encore allant de 3 à 5%.

Du fait de cette pente, la bande longitudinale arrière 26 de ladite au moins une couche élastique 2 définit également une pente allant de 1 à 10 %, de préférence allant de 1,5 et 6%, de préférence encore allant de 3 à 5%.

Encore à titre d'exemple, ledit au moins un longeron arrière 5 comporte :
- une bordure avant 53 ayant une hauteur de 10 à 30 mm, et
- une bordure arrière 54 ayant une hauteur de 1 à 10 mm.

La largeur L2 dudit au moins un longeron arrière 5 correspond à la distance entre ces bordures avant 53 et arrière 54.

Cette largeur L2 est supérieure à 100 mm, de préférence de 200 à 800 mm, de préférence encore de 350 à 650 mm.

Ledit au moins un longeron 5 est avantageusement réalisé dans un matériau plastique, avantageusement obtenu par moulage injection.

Par « matériau plastique », on entend par exemple le polyéthylène (PE), le polyéthylène haute densité (PEHD), le polypropylène (PP), le polycarbonate (PC), le polystyrène (PS), le poly polychlorure de vinyle (PVC), le polyuréthane (PUR).

De manière générale, ledit au moins un longeron 5 comporte avantageusement deux bordures latérales qui sont munies chacune d'organes d'emboîtement complémentaires 56 (représentés très schématiquement sur la figure 4), par exemple en queue d'aronde, pour assembler entre elles des pièces juxtaposées.

### Variante de réalisation

Selon un mode de réalisation particulier illustré sur la figure 5, ladite au moins une couche élastique 2 peut intégrer des moyens pour la régulation thermique de sa surface supérieure 21.

Pour cela, la bande longitudinale avant 25 de ladite au moins une couche élastique 2 comporte ici les moyens 6 adaptés à générer une régulation thermique de la surface supérieure 21.

En ce sens, ladite au moins une couche élastique 2 comporte :
- la couche élastique supérieure 23, muni des moyens de régulation thermique 6, et
- la couche élastique inférieure 24, telle que décrite ci-dessus en relation avec les figures 2 à 4.

La couche élastique supérieure 23 comporte elle-même deux parties :
- une partie avant 231, appartenant à la bande longitudinale avant 25, munie des moyens de régulation thermique 6, et
- une partie arrière 232, appartenant à la bande longitudinale arrière 26 pour former la pente d'évacuation des jus.

Pour former les moyens de régulation thermique 6, la partie avant 231 intègre :
- au moins une conduite 61 pour la circulation d'un premier fluide caloporteur, et
- éventuellement au moins une chambre étanche 62 contenant un second fluide caloporteur, recouvrant ladite au moins une conduite 61.

Ladite au moins une conduit 61 traverse ladite au moins une chambre étanche 62, de sorte à baigner dans le second fluide caloporteur.

Les conduites étanches 61 consistent avantageusement en des organes tubulaires réalisés dans un matériau déformable élastique, par exemple en caoutchouc.

Dans ce cas, la régulation thermique de la face supérieure 21 de la couche élastique 2 est réalisée par le second fluide caloporteur remplissant ladite au moins une chambre étanche 62, lui-même régulé par le premier fluide caloporteur circulant dans ladite au moins une conduite 61.

### Structure tubulaire souple

La structure de matelas 1 peut être associée, du côté de la limite avant S3, à un dispositif tubulaire souple 9 pour former un arrêtoir inférieur.

Ce dispositif tubulaire souple 9 consiste en une pièce monobloc, en forme générale de boudin ou de tube, qui comprend ici deux principales parties :
- une paroi tubulaire 91 qui délimite une chambre étanche 92 remplie avec un fluide, et
- une lèvre longitudinale radiale 93, raccordée longitudinalement à la paroi tubulaire 91 et s'étendant avantageusement sur toute la longueur de cette dernière.

Lorsque la chambre étanche 92 est remplie, la paroi tubulaire 91 est de forme générale cylindrique.

### Pose de la structure de matelas

En pratique, l'embase 3 est avantageusement positionnée sur le sol S4 tenant compte de l'agencement final de la structure de matelas 1.

En particulier, le longeron arrière 5 peut être formé par un ensemble de pièces assemblées entre elles par le biais de leurs organes d'emboîtement complémentaires 56 pour former une longueur monobloc et autostable.

Ladite au moins une couche élastique 2 est ensuite rapportée sur cette embase 3.

En l'espèce, les couches élastiques 23, 24 (avantageusement conditionnées en rouleau ou en plaque) sont déroulées successivement sur l'embase 3 : la couche élastique inférieure 24 puis la couche élastique supérieure 23.

La couche élastique supérieure 23 est avantageusement continue / linéaire sur toute la longueur du sol S4, de manière à assurer une protection optimale des pièces sous-jacentes 24, 3 à l'égard notamment de l'humidité.

La structure de matelas 1 est ensuite solidarisée avec le sol S4, par exemple au moyen de profilés 8 du type baguettes qui sont fixés dans le sol (avantageusement au moyen de pointes ou des clous) et qui coopèrent avec ladite au moins une couche élastique 2 (en l'espèce avec ses bandes longitudinales 235 précitées).

En l'espèce, au niveau de la bordure arrière 54 du longeron 5, le profilé 8 est disposé en regard de cette bordure arrière 54 et est enveloppé dans la bande longitudinale 235 « arrière ». Cette bande longitudinale 235 est ainsi repliée en U, de sorte que son extrémité libre s'étende en regard de la bordure arrière 54 précitée et de sorte à être prise en sandwich entre le sol et le profilé 8.

Au niveau de la bordure avant de la plaque avant 4, la bande longitudinale 235 « avant » est ici en appui sur le sol S4 et recouverte par la lèvre longitudinale radiale 93 du dispositif tubulaire souple 9. Le profilé 8 est ici enveloppé par le dispositif tubulaire souple 9, entre la paroi tubulaire 91 et la lèvre longitudinale radiale 93. Le profilé 8 est ainsi fixé au sol, au travers de la bande longitudinale 235 et de la lèvre longitudinale radiale 93 superposées.

Une fois en place, ladite au moins une couche élastique 2 épouse les deux parties de l'embase 3 (ladite au moins une plaque avant 4 et ledit au moins un longeron arrière 5).

Ladite au moins une couche élastique 2 (et le cas échéant les couches élastiques 23, 24) a ainsi une forme diédrique, avec une arête au niveau de la jonction entre les deux parties 4, 5 de l'embase 3.

Ladite au moins une couche élastique 2 (et le cas échéant les couches élastiques 23, 24) comporte alors les deux bandes longitudinales, définissant une face supérieure 21 avantageusement diédrique, à savoir :
- la bande longitudinale avant 25, sus-jacente de ladite au moins une plaque avant 4, et
- la bande longitudinale arrière 26, sus-jacente dudit au moins un longeron arrière 5.

La bande longitudinale avant 25 (et la face supérieure 21 correspondante) est alors généralement horizontale, ou au moins approximativement horizontale.

La bande arrière 26 borde quant à elle le couloir de circulation C, avec une pente descendante au niveau de la face supérieure 21 qui est orientée vers ce couloir de circulation C pour favoriser l'écoulement des fluides vers ce dernier.

Cette bande arrière 26 définit alors une pente, par rapport à l'horizontal, allant de 1 à 10 %, de préférence allant de 1,5 et 6%, de préférence encore allant de 3 à 5%.

Cette bande arrière 26, en pente, assure alors un écoulement gravitaire des jus (urine, lait, etc.) depuis la structure de matelas 1, vers le couloir de circulation C (et le cas échéant vers la grille G).

En pratique, en cas d'écoulement de jus sur la bande arrière 26 de la structure de matelas 1, ce jus va couler directement vers le couloir de circulation C (et le cas échéant vers la grille G) par simple gravité.

Cette bande arrière 26 reste ainsi relativement sèche, favorable aux conditions sanitaires.

Les différents jus peuvent être collectés ensuite au niveau du couloir de circulation C (voir au travers de la grille G).

## Revendications

1. Structure de matelas pour le confort des animaux dans une enceinte d'élevage, destinée à recouvrir le sol d'une zone d'accueil bordée par un couloir de circulation (C) éventuellement équipé d'une grille de collecte des déjections,
laquelle structure de matelas (1) comprend :
(i) au moins une couche élastique (2), comportant une face supérieure (21) qui est apte à subir une déformation élastique et qui comporte au moins un emplacement (T) sur lequel un animal est destiné à prendre appui,
(ii) une embase (3), destinée à reposer sur ledit sol et à recevoir ladite au moins une couche élastique (2),
laquelle embase (3) comprend au moins deux pièces juxtaposées :
- au moins une plaque avant (4), destinée à être rapportée à distance dudit couloir de circulation (C), sous une bande longitudinale avant (25) de ladite au moins une couche élastique (2), et
- au moins un longeron arrière (5), destiné à être intercalé entre ledit couloir de circulation (C) et ladite au moins une plaque avant (4), sous une bande longitudinale arrière (26) de ladite au moins une couche élastique (2),
laquelle au moins une plaque avant (4) et lequel au moins un longeron arrière (5) comportent chacun deux faces opposées :
- une face inférieure (41, 51), destinée à reposer sur le sol, et
- une face supérieure (42, 52), destinée à servir de surface de réception pour ladite au moins une couche élastique (2),
lesquelles faces opposées (41, 42) de ladite au moins une plaque avant (4) s'étendent parallèlement, ou au moins approximativement parallèlement, l'une par rapport à l'autre, et
lesquelles faces opposées (51, 52) dudit au moins un longeron arrière (5) convergent depuis une bordure avant (53) destinée à être juxtaposée à ladite plaque avant (4), vers une bordure arrière (54), opposée, destinée à être juxtaposée audit couloir de circulation (C),
**caractérisée en ce que** la largeur dudit au moins un longeron arrière (5) est supérieure à 100 mm, et
**en ce que** les faces opposées (51, 52) dudit au moins un longeron arrière (5) définissent entre elles une pente allant de 1 à 10 %.

2. Structure de matelas selon la revendication 1, **caractérisée en ce que** la largeur dudit au moins un longeron arrière (5) est de 200 à 800 mm, de préférence encore de 350 à 650 mm.

3. Structure de matelas selon l'une quelconque des revendications 1 ou 2, **caractérisée en ce que** les faces opposées (51, 52) dudit au moins un longeron arrière (5) définissent entre elles une pente allant de 1,5 et 6%, de préférence encore allant de 3 à 5%.

4. Structure de matelas selon l'une quelconque des revendications 1 à 3, **caractérisée en ce que** ledit au moins un longeron arrière (5) comporte :
- une bordure arrière (54) ayant une hauteur de 1 à 10 mm, et
- une bordure avant (53) ayant une hauteur de 10 à 30 mm.

5. Structure de matelas selon l'une quelconque des revendications 1 à 4, **caractérisée en ce que** ledit au moins un longeron arrière (5) est réalisé dans un matériau plastique, avantageusement obtenu par moulage injection.

6. Structure de matelas selon l'une quelconque des revendications 1 à 5, **caractérisée en ce que** ladite au moins une plaque avant (4) est réalisée dans un matériau élastique,
et **en ce que** la masse volumique de ladite au moins une plaque avant (4) est avantageusement supérieure à la masse volumique de ladite au moins une couche élastique (2).

7. Structure de matelas selon la revendication 6, **caractérisée en ce que** :
- la masse volumique de ladite au moins une plaque avant (4) est comprise entre 150 et 800 kg / m³, et
- la masse volumique de ladite au moins une couche élastique (2) est comprise entre 150 et 500 kg / m³.

8. Structure de matelas selon l'une quelconque des revendications 1 à 7, **caractérisée en ce que** ladite au moins une couche élastique (2) comprend deux couches élastiques superposées : une couche élastique supérieure (23) et une couche élastique inférieure (24),
laquelle couche élastique supérieure (23) forme la face supérieure (21) de ladite au moins une couche élastique (2), et
laquelle couche élastique inférieure (24) est interposée entre ladite couche élastique supérieure (23) et ladite embase (3).

9. Structure de matelas selon la revendication 8, **caractérisée en ce que** la couche élastique supérieure (23) comporte deux bandes longitudinales (235), s'étendant au-delà de ladite couche élastique inférieure (24), pour leur fixation au sol (S4).

10. Structure de matelas selon l'une quelconque des revendications 1 à 9, **caractérisée en ce qu'**elle comprend des profilés (8), du type baguettes, qui sont destinés à être fixés dans le sol et qui sont destinés à coopérer avec ladite au moins une couche élastique (2), avantageusement avec les bandes longitudinales (235).

11. Structure de matelas selon l'une quelconque des revendications 1 à 10, **caractérisée en ce que** ladite bande longitudinale avant (25) de ladite au moins une couche élastique (2) comporte :
- au moins une conduite (61) pour la circulation d'un premier fluide caloporteur, et
- éventuellement au moins une chambre étanche (62) contenant un second fluide caloporteur, recouvrant ladite au moins une conduite (61).

12. Enceinte pour l'élevage d'animaux comportant au moins une zone d'accueil (S) longée par un couloir de circulation (C) éventuellement équipé d'une grille (G) de collecte des déjections,
laquelle zone d'accueil (S) est recouverte par ladite structure de matelas (1) selon l'une quelconque des revendications 1 à 11 de sorte que ladite bande arrière (26) borde ledit couloir de circulation (C), avec une pente descendante orientée vers ledit couloir de circulation (C) pour favoriser l'écoulement des fluides vers ledit couloir de circulation (C).

13. Enceinte selon la revendication 12, **caractérisée en ce que** la structure de matelas comprend au moins une couche élastique (2) qui comprend deux couches élastiques superposées : une couche élastique supérieure (23) et une couche élastique inférieure (24),
laquelle couche élastique supérieure (23) forme la face supérieure (21) de ladite au moins une couche élastique (2),
laquelle couche élastique inférieure (24) est interposée entre ladite couche élastique supérieure (23) et ladite embase (3),
laquelle couche élastique supérieure (23) comporte de préférence deux bandes longitudinales (235), s'étendant au-delà de ladite couche élastique inférieure (24), pour leur fixation au sol (S4).

## Patentansprüche

1. Matratzenstruktur für den Komfort von Tieren in einer Tierzuchtanlage, die dazu bestimmt ist, den Boden eines Empfangsbereichs zu bedecken, der von einem Laufkorridor (C) umgeben ist, der eventuell mit einem Gitter zum Sammeln von Ausscheidungen versehen ist,
wobei die Matratzenstruktur (1)
(i) mindestens eine elastische Schicht (2), die eine eine elastische Verformung vertragende Oberseite (21) aufweist und die mindestens einen Platz (T) aufweist, auf dem sich ein Tier abstützen soll,
(ii) einen Sockel (3), der dazu bestimmt ist, auf dem Boden aufzuliegen und die mindestens eine elastische Schicht (2) aufzunehmen,
aufweist,
wobei die Basis (3) mindestens zwei nebeneinander angeordnete Stücke aufweist:
- mindestens eine vordere Platte (4), die dazu bestimmt ist, in einem Abstand vom Laufkorridor (C) unter einem vorderen Längsstreifen (25) der mindestens einen elastischen Schicht (2) angebracht zu werden, und
- mindestens einen hinteren Längsträger (5), der dazu bestimmt ist, zwischen dem Laufkorridor (C) und der mindestens einen vorderen Platte (4) unter einem hinteren Längsstreifen (26) der mindestens einen elastischen Schicht (2) eingefügt zu werden,
wobei die mindestens eine vordere Platte (4) und der mindestens eine hintere Längsträger (5) jeweils zwei voneinander abgewandte Seiten aufweisen:
- eine Unterseite (41, 51), die die dazu bestimmt ist, auf dem Boden zu ruhen, und
- eine Oberseite (42, 52), die die dazu bestimmt ist, als Aufnahmefläche für die mindestens eine elastische Schicht (2) zu dienen,
wobei sich die voneinander abgewandten Seiten (41, 42) der mindestens einen vorderen Platte (4) zueinander parallel oder mindestens näherungsweise parallel erstrecken und
die voneinander abgewandten Seiten (51, 52) des mindestens einen hinteren Längsträgers (5) von einem vorderen Rand (53), der dazu bestimmt ist, an die vordere Platte (4) anzugrenzen, zu einem abgewandten hinteren Rand (54), der dazu bestimmt ist, an den Laufkorridor (C) anzugrenzen, aufeinander zu laufen,
**dadurch gekennzeichnet, daß** die Breite des mindestens einen hinteren Längsträgers (5) größer als 100 mm ist und
daß die voneinander abgewandten Seiten (51, 52) des mindestens einen hinteren Längsträgers (5) zwischen sich ein Gefälle von 1 bis 10 % definieren.

2. Matratzenstruktur gemäß Anspruch 1, **dadurch gekennzeichnet, daß** die Breite des mindestens einen hinteren Längsträgers (5) zwischen 200 und 800 mm, vorzugsweise zwischen 350 und 650 mm beträgt.

3. Matratzenstruktur gemäß einem der Ansprüche 1 oder 2, **dadurch gekennzeichnet, daß** die voneinander abgewandten Seiten (51, 52) des mindestens einen hinteren Längsträgers (5) zwischen sich ein Gefälle von 1,5 bis 6 %, vorzugsweise von 3 bis 5 % aufweisen.

4. Matratzenstruktur gemäß einem der Ansprüche 1 bis 3, **dadurch gekennzeichnet, daß** der mindestens eine hintere Längsträger (5)
- einen hinteren Rand (54) mit einer Höhe von 1 bis 10 mm und
- einen vorderen Rand (53) mit einer Höhe von 10 bis 30 mm
aufweist.

5. Matratzenstruktur gemäß einem der Ansprüche 1 bis 4, **dadurch gekennzeichnet, daß** der mindestens eine hintere Längsträger (5) aus einem Plastikmaterial, vorzugsweise nach einem Spritzgußverfahren, hergestellt ist.

6. Matratzenstruktur gemäß einem der Ansprüche 1 bis 5, **dadurch gekennzeichnet, daß** die mindestens eine vordere Platte (4) aus einem elastischen Material hergestellt ist und daß die Fülldichte der mindestens einen elastischen Platte (4) vorteilhafterweise größer als die Fülldichte der mindestens einen elastischen Schicht (2) ist.

7. Matratzenstruktur gemäß Anspruch 6, **dadurch gekennzeichnet, daß**
die Fülldichte der mindestens einen vorderen Platte (4) zwischen 150 und 800 kg/m³ beträgt und
die Fülldichte der mindestens einen elastischen Schicht (2) zwischen 150 und 500 kg/m³ beträgt.

8. Matratzenstruktur gemäß einem der Ansprüche 1 bis 7, **dadurch gekennzeichnet, daß** die mindestens eine elastische Schicht (2) zwei übereinanderliegende elastische Schichten aufweist: eine obere elastische Schicht (23) und eine untere elastische Schicht (24),
wobei die obere elastische Schicht (23) die Oberseite (21) der mindestens einen elastischen Schicht (2) bildet und
die untere elastische Schicht (24) zwischen der oberen elastischen Schicht (23) und dem Sockel (3) eingefügt ist.

9. Matratzenstruktur gemäß Anspruch 8, **dadurch gekennzeichnet, daß** die obere elastische Schicht (23) zwei Längsbänder (235) aufweist, die sich für deren Befestigung am Boden (S4) über die untere elastische Schicht (24) hinaus erstrecken.

10. Matratzenstruktur gemäß einem der Ansprüche 1 bis 9, **dadurch gekennzeichnet, daß** sie leistenartige Profile (8) aufweist, die dazu bestimmt sind, im Boden befestigt zu werden, und die dazu bestimmt sind, mit der mindestens einen elastische Schicht (2), vorzugsweise mit den Längsbändern (235), zusammenzuwirken.

11. Matratzenstruktur gemäß einem der Ansprüche 1 bis 10, **dadurch gekennzeichnet, daß** der vordere Längsstreifen (25) der mindestens einen elastischen Schicht (2)
- mindestens eine Leitung (61) für den Durchlauf einer ersten Wärmeträgerflüssigkeit und
- eventuell mindestens eine die mindestens eine Leitung (61) bedeckende dichte Kammer (62) mit einer zweiten Wärmeträgerflüssigkeit
aufweist.

12. Tierzuchtanlage mit mindestens einem Empfangsbereich (S), an dem ein Laufkorridor (C) entlangführt, der eventuell mit einem Gitter (G) zum Sammeln von Ausscheidungen versehen ist,
wobei der Empfangsbereich (S) mit der Matratzenstruktur gemäß einem der Ansprüche 1 bis 11 bedeckt ist, so daß das hintere Band (26) den Laufkorridor (C) mit einem zum Laufkorridor (C) hin geneigten Gefälle, um das Abfließen der Flüssigkeiten zum Laufkorridor (C) hin zu fördern, umgibt.

13. Anlage gemäß Anspruch 12, **dadurch gekennzeichnet, daß** die Matratzenstruktur mindestens eine elastische Schicht (2) aufweist, die zwei übereinanderliegende elastische Schichten aufweist: eine obere elastische Schicht (23) und eine untere elastische Schicht (24),
wobei die obere elastische Schicht (23) die Oberseite (21) der mindestens einen elastischen Schicht (2) bildet,
die untere elastische Schicht (24) zwischen der oberen elastischen Schicht (23) und dem Sockel (3) eingefügt ist und
die obere elastische Schicht (23) zwei Längsbänder (235) aufweist, die sich für deren Befestigung am Boden (S4) über die untere elastische Schicht (24) hinaus erstrecken.

## Claims

1. A mattress structure for the comfort of animals in a livestock enclosure, intended to cover the ground of an accommodation area bordered by a circulation corridor (C), possibly equipped with an excreta collecting grid,
said mattress structure (1) comprising:
(i) at least one elastic layer (2), including an upper face (21) that is able to undergo an elastic deformation and that includes at least one location (T) suitable for an animal to rest on,
(ii) a base (3), intended to bear on said ground and to receive said at least one elastic layer (2),
said base (3) comprising at least two juxtaposed parts:
- at least one front plate (4), intended to be placed remote from said circulation corridor (C), under a longitudinal front strip (25) of said at least one elastic layer (2), and
- at least one rear stringer (5), intended to be interposed between said circulation corridor (C) and said at least one front plate (4), under a longitudinal rear strip (26) of said at least one elastic layer (2),
said at least one front plate (4) and said at least one rear stringer (5) each comprising two opposite faces:
- a lower face (41, 51), intended to rest on the ground, and
- an upper face (42, 52), intended to serve as a receiving surface for said at least one elastic layer (2),
said opposite faces (41, 42) of said at least one front plate (4) extending parallel, or at least approximatively parallel, to each other, and
said opposite faces (51, 52) of said at least one rear stringer (5) converging from a front border (53) intended to be juxtaposed to said front plate (4), towards an opposite rear border (54), intended to be juxtaposed to said circulation corridor (C),
**characterized in that** the width of said at least one rear stringer (5) is greater than 100 mm, and
**in that** the opposite faces (51, 52) of said at least one rear stringer (5) define between each other a slope from 1 to 10 %.

2. The mattress structure according to claim 1, **characterized in that** the width of said at least one rear stringer (5) is from 200 to 800 mm, or preferably from 350 to 650 mm.

3. The mattress structure according to any one of claims 1 or 2, **characterized in that** the opposite faces (51, 52) of said at least one rear stringer (5) define between each other a slope from 1.5 to 6 %, or preferably from 3 to 5 %.

4. The mattress structure according to any one of claims 1 to 3, **characterized in that** said at least one rear stringer (5) includes:
- a rear border (54) having a height from 1 to 10 mm, and
- a front border (53) having a height from 10 to 30 mm.

5. The mattress structure according to anyone of claims 1 to 4, **characterized in that** said at least one rear stringer (5) is made of a plastic material, advantageously obtained by injection moulding.

6. The mattress structure according to anyone of claims 1 to 5,
**characterized in that** said at least one front plate (4) is made of an elastic material,
and **in that** the density of said at least one front plate (4) is advantageously higher than the density of said at least one elastic layer (2).

7. The mattress structure according to claim 6, **characterized in that**:
- the density of said at least one front plate (4) is of between 150 and 800 kg / m³, and
- the density of said at least one elastic layer (2) is of between 150 and 500 kg / m³.

8. The mattress structure according to anyone of claims 1 to 7, **characterized in that** said at least one elastic layer (2) comprises two superimposed elastic layers: an upper elastic layer (23) and a lower elastic layer (24),
said upper elastic layer (23) forming the upper face (21) of said at least one elastic layer (2), and
said lower elastic layer (24) being interposed between said upper elastic layer (23) and said base (3).

9. The mattress structure according to claim 8, **characterized in that** the upper elastic layer (23) includes two longitudinal strips (235), extending beyond said lower elastic layer (24), for the fastening thereof to the ground (S4).

10. The mattress structure according to anyone of claims 1 to 9, **characterized in that** it comprises profiles (8), of the rod type, which are intended to be fastened to the ground and that are intended to cooperate with said at least one elastic layer (2), advantageously with the longitudinal strips (235).

11. The mattress structure according to any one of claims 1 to 10, **characterized in that** said longitudinal front strip (25) of said at least one elastic layer (2) includes:
- at least one duct (61) for the circulation of a first heat-transfer fluid, and
- possibly at least one sealed chamber (62) containing a second heat transfer fluid, covering said at least one duct (61).

12. A livestock enclosure including at least one accommodation area (S) bordered by a circulation corridor (C), possibly equipped with an excreta collecting grid (G),
said accommodation area (S) is covered by said mattress structure (1) according to any one of claims 1 to 11, so that said rear strip (26) borders said circulation corridor (C), with a downward slope oriented towards said circulation corridor (C) to favours the flow of fluids towards said circulation corridor (C).

13. The enclosure according to claim 12, **characterized in that** the mattress structure comprises at least one elastic layer (2) that comprises two superimposed elastic layers: an upper elastic layer (23) and a lower elastic layer (24),
said upper elastic layer (23) forming the upper face (21) of said at least one elastic layer (2),
said lower elastic layer (24) being interposed between said upper elastic layer (23) and said base (3),
said upper elastic layer (23) preferably including two longitudinal strips (235), extending beyond said lower elastic layer (24), for the fastening thereof to the ground (S4).
